# EUROPÄISCHE PATENTSCHRIFT

(11) **EP 1 027 242 B1**
(45) Veröffentlichungstag und Bekanntmachung des Hinweises auf die Patenterteilung: **02.05.2002**
(21) Anmeldenummer: 98965642.6
(22) Anmeldetag: 27.10.1998
(51) Int. Cl.: B60T 8/26

(54) **VERFAHREN ZUR STEUERUNG DES BREMSDRUCKVERLAUFS IN DEN HINTERRADBREMSEN FÜR EINE FAHRZEUGBREMSANLAGE MIT EBV**
METHOD FOR CONTROLLING BRAKE-PRESSURE CHARACTERISTICS IN THE REAR WHEEL BRAKES OF A MOTOR VEHICLE BRAKE SYSTEM WITH ELECTRONIC REGULATION OF BRAKE POWER DISTRIBUTION
PROCEDE POUR REGULER LES CARACTERISTIQUES DE PRESSION DE FREINAGE DANS LES FREINS DE ROUES ARRIERE D'UN SYSTEME DE FREINAGE DE VEHICULE A REGULATION ELECTRONIQUE DE LA REPARTITION DE LA PRESSION DE FREINAGE

(30) Priorität: 06.11.1997 DE 19749048; 21.03.1998 DE 19812554
(43) Veröffentlichungstag der Anmeldung: 16.08.2000
(73) Patentinhaber: Continental Teves AG & Co. oHG, 60488 Frankfurt (DE)
(72) Erfinder: ZENZEN, Markus, D-40723 Hilden (DE); KNAPP, Thomas, D-63791 Karlstein (DE); BAUER, Thomas, D-56859 Bullay (DE)
(86) Internationale Anmeldenummer: EP9806801
(87) Internationale Veröffentlichungsnummer: WO9924300

(56) Entgegenhaltungen:
- EP-A- 0 096 346
- EP-A- 0 100 096
- EP-A- 0 392 815
- EP-A- 0 563 740

## Beschreibung

Die Erfindung bezieht sich auf ein Verfahren, daß für eine Fahrzeugbremsanlage mit elektronischer Regelung der Bremskraftverteilung (EBV-Funktion) vorgesehen ist und zur Steuerung des Bremsdruckverlaufs in den Hinterradbremsen dient.

Es ist bereits bekannt, die Bremskraftverteilung auf Vorderund Hinterachse, die dynamischen Einflüssen unterliegt, mit Hilfe elektronisch gesteuerter Hydraulikventile zu regeln. Grundsätzlich wird hierzu das Drehverhalten der Räder mit Radsensoren gemessen und zur Begrenzung oder Regelung des Bremsschlupfes der Hinterräder ausgewertet. Bekanntlich könnte ein zu hoher Bremsschlupf an den Hinterrädern die Fahrstabilität des Fahrzeugs gefährden und ein Schleudern des Fahrzeugs nachsichziehen.

Mit Hilfe der elektrisch steuerbaren Hydraulikventile, die bei einer solchen Bremsanlage im Druckmittelweg vom Hauptzylinder zu den Hinterradbremsen eingefügt sind, wird daher der Bremsdruck und dadurch der Bremsschlupf durch Umschalten und damit Sperren des Druckmittelwegs zu den Hinterradbremsen auf ein zulässiges Maß begrenzt. In vielen Fällen schließt sich an diese Druck-Konstantphase eine erneute Druckaufbauphase an, z.B. dann, wenn der Vordruck erhöht wird oder wenn der Bremsschlupf am Hinterrad wieder abgesunken ist.

Der Eintritt in die EBV-Regelung erfolgt häufig in einer relativ ruhigen, ausgeglichenen Phase des Bremsvorgangs oder Teilbremsvorgangs (im Gegensatz z.B. zu einer Panikbremsung). Die in dieser Phase durch die Ventilbetätigung hervorgerufenen Geräusche sind daher deutlich vernehmbar und können zur Irritation des Fahrers und der Insassen führen; solche Geräusche stellen jedenfalls eine Komfortminderung dar.

Aus der DE 33 01 948 A1 ist bereits ein Verfahren zur elektronischen Steuerung der Bremskraftverteilung bekannt, bei dem aus dem Drehverhalten der einzelnen Räder der Bremsschlupf und die Längsverzögerung des Fahrzeugs ermittelt werden und bei dem durch Ansteuerung der Bremsdruckregelventile der Bremsschlupf der Hinterräder auf einen bestimmten Prozentsatz des Bremsschlupfes der Vorderräder begrenzt wird. Nach der DE 33 06 611 A1 wird zusätzlich noch eine Möglichkeit geschaffen, den Bremsdruck an der Hinterachse über ein hydraulisches, elektrisch steuerbares Ventil, das einen weg von den Hinterradbremsen zu einem Druckausgleichsbehälter öffnet, abzubauen.

In der EP 0 563 740 A1 ist ein Verfahren zur Steuerung der Bremskraftverteilung beschrieben, bei dem der Bremskraftverlauf an den Hinterradbremsen im Zusammenwirken mit einem ABS-System sinnvoll gesteuert werden soll, um die maximal mögliche Bremskraft auf die Hinterräder zu übertragen, bei dem der Bremsdruck bis zu einem Bremsdruckschwellwert aus dem Hauptbremszylinder unverändert an die Hinterräder übertragen wird und ab dem Bremsdruckschwellwert der Bremsdruck auf die Hinterräder mit Hilfe eines Bremskraftregelventils lastabhängig verringert wird, wobei der Bremsgrad während eines Bremsvorgangs erfaßt wird und mit Hilfe eines elektromagnetischen Ventils die Funktion des Bremskraftregelventils dann aufgehoben wird, wenn der Bremsgrad kleiner als ein voreingestellter Bremsgradschwellwert ist und das Bremskraftregelventil dann in Funktion tritt, wenn der Bremsgrad größer als der Bremsgradschwellwert ist, wobei der Bremsdruckschwellwert auf einen niedrigeren Wert korrigiert wird, wenn das ABS-System für die Hinterräder anspricht

Der Erfindung liegt nun die Aufgabe zugrunde, ein Verfahren zur elektronischen Regelung der Bremskraftverteilung zu schaffen, das ohne störende Effekte oder Nebeneffekte, wie Geräuschentwicklung, eine wirkungsvolle Bremskraftverteilung, insbesondere eine wirkungsvolle Bremsdruckeinsteuerung in die Hinterradbremsen, sicherstellt. Im Vergleich zu den herkömmlichen Anlagen, bei denen störende Ventilbetätigungsgeräusche auftreten, war eine Verringerung der Ventil-Schaltgeräusche und damit eine Komforterhöhung gefordert. Es hat sich herausgestellt, daß diese Aufgabe durch das im beigefügten Anspruch 1 beschriebene Verfahren gelöst werden kann. Die Besonderheit des erfindungsgemäßen Verfahrens besteht danach darin, daß während eines Bremsvorganges, d.h. Teilbremsvorganges oder einer ABS-Regelung, die Fahrzeugverzögerung erfaßt und als Regelkriterium ausgewertet wird und daß eine Erhöhung des Bremsdruckes in den Hinterradbremsen nach dem Einsetzen einer EBV-Regelungsfunktion (EBV-Eintritt) nur dann zugelassen wird, wenn (a) die Fahrzeugverzögerung nach dem EBV-Eintritt über einen vorgegebenen Mindestwert angestiegen ist und/oder wenn (b) das Vorliegen von Kriterien, die auf ein Bremsfading, auf eine Fading-Gefahr oder einen Bremsenfehler hinweisen, erkannt wird und/oder wenn (c) die Fahrzeugverzögerung einen hohen, für die Sicherheit des Fahrzeugs kritischen Grenzwert überschreitet.

Eine Kombination der Bedingungen (a) und (b) oder der Bedingungen (a) und (c) hat sich als besonders vorteilhaft erwiesen.

Das erfindungsgemäße Verfahren beruht auf der Erkenntnis, daß es genügt, einen weiteren Bremsdruckaufbau in den Hinterradbremsen dann und nur dann zuzulassen, wenn bestimmte Bedingungen oder Kriterien erfüllt sind. Im Falle (a) bedeutet dies, daß ein höherer Hinterradbremsdruck erforderlich ist, weil z.B. der Fahrer eine höhere Abbremsung wünscht bzw. durch höhere Pedalkraft eine Bremsdruckerhöhung herbeigeführt hat. In diesem Fall kann die Bremsdruckerhöhung an der Hinterachse dann gestartet werden, wenn die Fahrzeugverzögerung nach dem EBV-Eintritt um einen bestimmten Verzögerungswert von beispielsweise 0,2 g oder mehr angestiegen ist; dies ist ein Indiz für die Situation (a).

Nach einem Ausführungsbeispiel des erfindungsgemäßen Verfahrens wird als Mindestwert, dessen Überschreitung als Kriterium für das Zulassen einer Bremsdruckerhöhung in den Hinterradbremsen gewertet wird, eine Fahrzeugverzögerungs-Zunahme im Bereich zwischen 0,15 g und 0,3 g, z.B. ein Wert von etwa 0,2 g, vorgegeben, wobei g die Erdbeschleunigungskonstante bedeutet. Dies ist ein Beispiel für die Situation (a).

Ein weiteres Ausführungsbeispiel des erfindungsgemäßen Verfahrens besteht darin, daß ein Kriterium oder ein Hinweis auf ein Bremsfading, auf eine Fading-Gefahr oder auf einen Defekt mit Hilfe eines Zählers gewonnen wird, dessen Inhalt während eines Bremsvorgangs oder während einer Bremsenbetätigung nach einem vorgegebenen Zeitraster (z.B. bei jedem Arbeitstakt, einem Vielfachen des Arbeitstaktes, jedem Loop oder einem Vielfachen) geändert wird. Der Zählerinhalt wird dabei in dem vorgegebenen Zeitraster jeweils um einen von der Fahrzeugverzögerungs-Zunahme abhängigen Wert erhöht. Die Erniedrigung des Zählerinhalts erfolgt am einfachsten nach einen festen Raster. Eine Abbau des Zählerinhalts mit fallender Bremsentemperatur oder in Abhängigkeit von Meßgrößen, die die Bremsentemperatur wiedergeben, von der Fahrzeuggeschwindigkeit etc. kann ebenfalls sinnvoll sein.

Es hat sich als sinnvoll erwiesen, die Erhöhung des Zählerinhalts bei Zunahme der Fahrzeugverzögerung um etwa 0,1 bis 0,15 g pro Raster-Schritt einsetzen zu lassen, wobei bei höheren Fahrzeugverzögerungs-Zunahmen der Zählerinhalt schneller im Vergleich zu der Änderung bei geringer Fahrzeugverzögerungs-Zunahme erhöht wird.

Das Erniedrigen des Zählerinhaltes läßt sich mit dem Lösen der Bremse oder Freigeben des Bremspedals, das sich z.B. durch den Wechsel des Bremslichtschalter-Signals erkennen läßt, logisch verknüpfen.

Im Rahmen der Erfindung ist es auch vorgesehen, die Zählerrate in Abhängigkeit von der Fahrzeuggeschwindigkeit zu variieren. Weiterhin ist es sinnvoll, in Abhängigkeit von den Bremsenbetätigungssignalen und anderen Einflußgrößen ein Modell der Bremsentemperatur zu bilden, weil mit zunehmender Temperatur das Auftreten von Bremsenfading wahrscheinlicher wird.

Bei einer besonders hohen Fahrzeugverzögerung von beispielsweise über 0,45 g, die nur durch eine sehr heftige Bremsenbetätigung hervorgerufen werden kann, wird aus Sicherheitsgründen grundsätzlich das Sperren oder Verzögern des Bremsdruckaufbaus an der Hinterachse zugunsten einer Abbremsung mit besonders kurzem Bremsweg aufgehoben.

In den beigefügten Unteransprüchen und in der nachfolgenden Beschreibung sind noch weitere Details des erfindungsgemäßen Verfahrens beschrieben. Anhand der beigefügten Diagramme werden im folgenden die Zusammenhänge näher erläutert.

Es zeigen:
- Fig. 1: als Flow-Chart der prinzipielle Wirkungsweise des erfindungsgemäßen Verfahrens und
- Fig. 2: im Diagramm einen Bremsdruck- und EBV-Regelungsvorgang, bei dem einige der erfindungsgemäßen Maßnahmen zur Wirkung gelangen.

Erfindungsgemäß wird also bei einem Bremsvorgang mit elektronisch geregelter Bremskraftverteilung auf Vorder- und Hinterachse, kurz EBV-Regelung oder EBV-Funktion genannt, grundsätzlich ein weiterer Bremsdruckaufbau in den Hinterradbremsen nur dann zugelassen, wenn dies als sinnvoll oder notwendig erachtet wird. Dies ist zum Beispiel der Fall, wenn der Fahrer die Pedalkraft und damit den Vordruck erhöht; dies geschieht mit der Absicht, das Fahrzeug stärker zu verzögern. In diesem Fall wird das Zulassen eines weiteren Druckaufbaus an der Hinterachse an die Zunahme der Fahrzeugverzögerung gekoppelt. Wenn die Fahrzeugverzögerung nach einem EBV-Eintritt in einer bestimmten Zeitspanne über einen vorgegebenen Grenzwert angestiegen ist, wird Druckaufbau - schrittweise - zugelassen. Dies ist der vorgenannte Fall (a).

### Zahlenbeispiel:

Ein EBV-Eintritt erfolgt bei einer Fahrzeugverzögerung von 0,4 g. Als Mindestwert der Zunahme ist eine Verzögerungsdifferenz von 0,2 g vorgegeben. In diesem Falle wird ein weiterer Druckaufbau an der Hinterachse erst zugelassen, wenn die Fahrzeugverzögerung mindestens 0,6 g erreicht.

Es ist aber auch zu bedenken, daß es Situationen gibt, in denen der Fahrer stärker verzögern möchte, dies aber nicht kann, weil seine Fußkraft nicht ausreicht. Ein solcher Fall ist z.B. dann gegeben, wenn ein Bremsfading vorliegt, oder bei einem Defekt in der Bremsanlage, z.B. am Bremskraftverstärker.

Die Erfindung geht nun von der Überlegung aus, daß z.B. im Bremsfadingfall der Fahrer in der Lage sein müßte, den Bremsdruck zu erhöhen, um die Fahrzeugverzögerung konstanthalten zu können. Für ein Ansteigen der Verzögerung müßte der Bremsdruck weiter erhöht werden. Denkbar ist auch der Fall, daß die Verzögerung sogar abnimmt, weil der Fahrer den Bremsdruck aufgrund der zu hohen erforderlichen Fußkraft nicht mehr steigern kann.

Der Erfindung liegt die Überlegung zugrunde, daß in solchen Fällen während der EBV-Regelung eine Druckerhöhung an der Hinterachse ermöglicht werden sollte. Dies ist aber nicht über die oben im Fall (a) beschriebenen Kriterien herbeizuführen, weshalb erfindungsgemäß andere Hinweise oder Kriterien, die auf ein Bremsfading oder auf Defekte schließen lassen, ausgewertet werden. Das zuvor beschriebene Kriterium der Verzögerungszunahme (Fall (a)) wird unbrauchbar, wenn infolge des Bremsfading oder des Defektes keine weitere ausreichende Fahrzeugverzögerung zu erreichen ist.

Erfindungsgemäß wird daher zu den Maßnahmen (b) und (c) gegriffen:

Im Fall (c) wird aus Sicherheitsgründen dann eine weitere Bremsdruckerhöhung an der Hinterachse zugelassen, wenn die Fahrzeugverzögerung einen relativ hohen, vorgegebenen Grenzwert von z.B. 0,45 g erreicht oder überschreitet. Es kann davon ausgegangen werden, daß der Fahrer bei hoher Bremskraft auch im Fehlerfalle (Bremsfading oder Verstärkerausfall) eine Verzögerung von 0,45 g (entsprechend einer Fußkraft von ca. 500 N) erreichen kann. Aus Sicherheitsgründen wird also in diesem Fall (c) grundsätzlich eine weitere Druckerhöhung an der Hinterachse zugelassen.

Im Fall (b) geht es darum, das Vorliegen oder die Gefahr von Bremsfading zu erkennen und als Folge dieser Erkennung einen Druckaufbau an der Hinterachse zuzulassen. Auch dies hat den Vorteil, daß ein Druckaufbau nur im Bedarfsfall erfolgt.

Ein Bremsfading kann auf unterschiedliche Weise auftreten. Entweder bei langen Bremsungen (Bergabfahrt /Hochgeschwindigkeit) und/oder bei häufigen Bremsintervallen.

Ein Bremsfading ist natürlich nicht nur von der Bremszeit oder Bremsenbetätigungszeit, sondern auch vom Bremsdruck bzw. von der Fahrzeugverzögerung abhängig. Für die Erkennung von Bremsfading wird daher nach einem vorteilhaften Ausführungsbeispiel der Erfindung die Verwendung eines Zählers in der Regelungs-Software vorgeschlagen, der ab einem bestimmten Zählerinhalt oder Zählerstand ein Bit aktiviert, das den Bremsfading-Fall signalisiert. Das Hochzählen des Zählers beginnt in diesem Fall mit jeder Bremsenbetätigung, die man z.B. aus dem Bremslichtschalterwechsel von 0 nach 1 erkennen kann, und/oder bei einer Fahrzeugverzögerung, die im Zeitraster einen Wert von beispielsweise 0,1 g überschreitet (im Zeitraster, d.h. bei jedem Loop oder einem Mehrfachen eines Loops).

Das Hochzählen im Zeitraster (pro Loop oder einem Vielfachen) erfolgt bei höheren Verzögerungswerten in einem stärkeren Maße, wobei z.B. folgende Stufung gewählt werden kann:

| Fahrzeugverzögerung(in g) | Zählerinhalt |
|---|---|
| 0,11 - 0,3 | +1 |
| 0,31 - 0,5 | +2 |
| 0,51 - 0,7 | +3 |
| 0,71 - 0,9 | +4 |
| > 0,91 | +5 |

Natürlich sind dies nur beispielhafte Werte, die von dem gewünschten Bremsverhalten und von dem jeweiligen Fahrzeugtyp abhängen.

Der Zähler wird nach einem Wechsel des Bremslichtschalters von 1 nach 0 oder beim Absinken der Fahrzeugverzögerung auf einen Wert unter z.B. 0,05 g im Zeitraster heruntergezählt. Die Verzögerungsabhängigkeit (< 0,05 g) gilt insbesondere auch für den Fall, daß die Regelung unabhängig von dem Bremslichtschalter betrieben wird, um zu vermeiden, daß ein defekter Bremslichtschalter die Regelung nachteilig beeinflußt.

Der erfindungsgemäß in einem Ausführungsbeispiel verwendete Zähler wird also außerhalb und innerhalb eines EBV- oder ABS-Regelungsvorgangs hoch- und heruntergezählt. Folglich ist es auch möglich, innerhalb und außerhalb der Regelung das Bit für die Bremsfading-Erkennung zu setzen. Geschieht dies außerhalb einer Regelung, wird sofort mit dem EBV-Eintritt in der Druckaufbauphase der Bremsdruck in den Hinterradbremsen aufgebaut. Geschieht dies hingegen innerhalb einer EBV-Regelung, so wird Druckaufbau erst ab diesem Zeitpunkt, nämlich erst nach der Bremsfading-Erkennung zugelassen. Das Bit wird gelöscht, sobald der Zählerstand unter einen vorgegebenen Soll-Wert zurückgelaufen ist. Diese Situation tritt ein, wenn die Bremse längere Zeit nicht betätigt wird.

Das Hoch- und Herunterzählen des Zählers wird zweckmäßiger Weise in Abhängigkeit von der Fahrzeuggeschwindigkeit variiert, weil z.B. während eines Bremsvorgangs die Abkühlung der Bremse auch von der Fahrzeuggeschwindigkeit abhängig ist. Das Abkühlen und das Maß der Abkühlung ist aber wiederum abhängig von dem jeweiligen Fahrzeugtyp, den Strömungsverhältnissen am Fahrzeug, der Verwendung und Auslegung von Kühlkanälen für die Bremse etc..

Des weiteren ist es auch möglich, auf Temperaturmodelle zurückzugreifen, die in manchen Brems-Regelungssystemen ohnehin vorhanden sind und die eine Abschätzung der jeweils herrschenden Temperatur in Abhängigkeit von Bremsbetätigungssignalen und anderen Einflüssen zulassen. In einem solchen Fall wird ab einer bestimmten, errechneten Bremsscheibentemperatur an der Vorderachse der Bremsdruckaufbau an der Hinterachse wieder zugelassen.

Bei Bremsanlagen und Fahrzeugregelungssystemen, die den Druck im Hauptzylinder erfassen, ist es auch möglich, über den Drucksensor ein Erkennungskriterium für Bremsfading zu definieren. Ein Bremsfading oder ein Bremsfadings-Verdacht liegt z.B. dann vor, wenn der Bremsdruck in der Radbremse sehr hoch ist, die Fahrzeugverzögerung dagegen unter dem rechnerisch zu erwartenden Betrag liegt. Es gilt z.B. die Faustformel, nach der eine Bremsdruckerhöhung von 10 bar zu einer Fahrzeugverzögerung von ca. 0,1 g führen. Auch auf diesem Wege ist also eine Fading-Erkennung möglich, die dazu führt, daß der Druckaufbau an der Hinterachse wieder zugelassen wird.

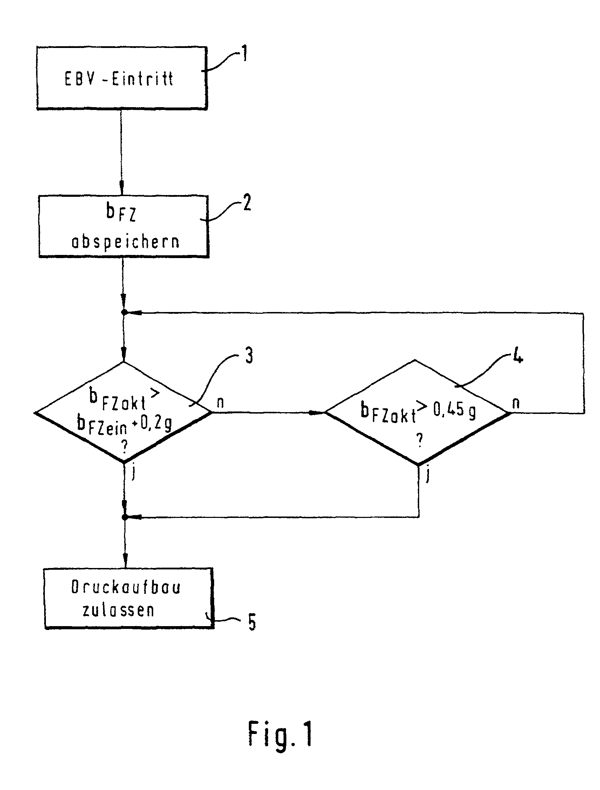

Das Flow-Chart nach Fig. 1 veranschaulicht die zuvor erläuterte Arbeitsweise des erfindungsgemäßen Verfahrens. Nach einem im Schritt 1 erkannten EBV-Eintritt wird in 2 die Fahrzeugverzögerung _{bFZ} erfaßt und zur Auswertung abgespeichert. Nun wird im Schritt 3 überprüft, ob die aktuelle Fahrzeugverzögerung b_{FZakt} über einem vorgegebenen Mindest-Differenzwert von 0,2 g in bezug zur Fahrzeugverzögerung bei EBV-Eintritt (b_{FZein}) angestiegen ist. Ist dies nicht der Fall und ist auch die Bedingung 4 nicht erfüllt, führt die Schleife zurück zum Eingang der Stufe 3.

Die Bedingung 4 sagt aus, wenn sie erfüllt ist, daß die aktuelle Fahrzeugverzögerung b_{FZakt} den hohen Verzögerungswert von 0,45 g überschritten hat.

Wenn die Bedingungen 3 oder 4 erfüllt sind, wird im Schritt 5 ein weiterer Druckaufbau an der Hinterachse des Fahrzeugs zugelassen.

Die zuvor beschriebene Bremsfading-Erkennung ist in Fig. 1 nicht dargestellt. Diese Erkennung könnte durch eine Bedingungsabfrage analog dem Schritt 4 in Fig. 1 dargestellt werden.

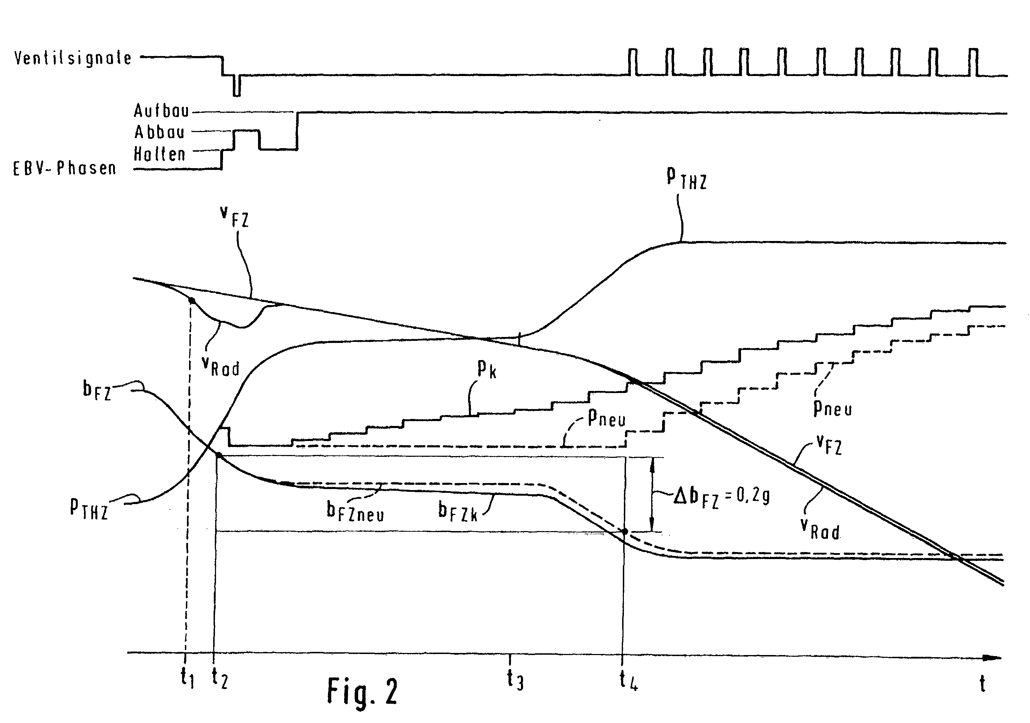

In Fig. 2 ist eine konventionelle EBV-Druckaufbaumodulation an der Hinterachse einer Druckaufbaumodulation bei Anwendung des erfindungsgemäßen Verfahrens (verzögerungsabhängige Modulation) gegenübergestellt. In den obersten Kurven sind die Ventilsignale, die zur Ventilansteuerung (Ansteuerung des zu der jeweiligen Hinterradbremse führenden Einlaß- und Auslaßventils) führen, und die EBV-Phasen dargestellt. Die durchgezogene Linien beziehen sich auf die bisherige Druckaufbaumodulation, die gestrichelten auf die erfindungsgemäße.

In Fig. 2 ist außerdem die Fahrzeuggeschwindigkeit v_{FZ} und der Geschwindigkeitsverlauf v_{Rad} eines Hinterrades wiedergegeben, welches etwa zum Zeitpunkt t₁ einen relativ hohen Bremsschlupf annimmt und einen EBV-Eintritt auslöst.

Des weiteren ist in Fig. 2 der Druckverlauf p_{THZ} im Hauptzylinder in dem hier beschriebenen Beispiel wiedergegeben. Etwa zum Zeitpunkt t₃ erhöht der Fahrer die Pedalkraft und damit den Hauptzylinderdruck p_{THZ}, was bei der erfindungsgemäßen Druckaufbaumodulation erst zum Zeitpunkt t₄ eine Erhöhung des Bremsdruckes in den Hinterradbremsen auslöst. Zuvor, nämlich in der Zeitspanne zwischen t₂ und t₄ blieb der Druck in den Hinterradbremsen trotz des EBV-Regelungsvorgangs als Folge des erfindungsgemäßen Verfahrens konstant, wärend bei konventioneller Druckaufbaumodulation auch hier der Druck im Raster erhöht worden wäre. Diese unterschiedlichen Druckaufbau-Kennlien pₙₑᵤ und pₖ (konventionell) sind ebenfalls in Fig. 2 dargestellt und zeigen den unterschiedlichen Druckverlauf in den Hinterradbremsen während einer EBV-Regelung bei Anwendung des konventionellen und des erfindungsgemäßen Verfahrens.

Schließlich ist in Fig. 2 noch die Fahrzeugverzögerung b_{FZ} dargestellt. In der Zeitspanne zwischen t₂ und t₄ unterscheidet sich die (gestrichelt dargestellte) Fahrzeugverzögerung, die sich bei Anwendung des erfindungsgemäßen Verfahrens einstellt, nur relativ wenig von einer Fahrzeugverzögerung bei einer konventionellen EBV-Regelung.

In der Zeitspanne zwischen t₂ und t₄ ist jedoch in dem Situationsbeispiel, das Fig. 2 beschreibt, die Verzögerung um 0,2 g angestiegen. Der maßgebliche Mindestwert von hier 0,2 g ist also erreicht, weshalb im Anschluß an t₄ wieder ein Druckaufbau an der Hinterachse zugelassen wird. Die Ventilansteuerung (oberste Kurve in Fig. 2) und dementsprechend der Druckanstieg erfolgt nach einem Zeitraster, das bei Schaltungen dieser Art vorzugsweise mit dem Arbeitstakt, den Loops oder einem Vielfachen dieser Loops, übereinstimmt.

Durch die erfindungsgemäße, verzögerungsabhängige Bremsdruckeinsteuerung in die Hinterradbremsen im EBV-Fall wird, weil nur bei tatsächlichem Bedarf das entsprechende Einlaßventil angesteuert wird, eine wesentliche Geräuschminderung und damit Komforterhöhung erreicht. Eine nennenswerte Verringerung der Bremsaktivität oder verlängerung des Bremsweges ist damit nicht verbunden, weil, wie Fig. 2 zeigt, im Anschluß an t₄ der Bremsdruck relativ schnell wieder auf das bei konventioneller Druckmodulation gegebene Druckniveau ansteigt.

## Patentansprüche

1. Verfahren zur Steuerung der Bremskraftverteilung für eine Fahrzeug-Bremsanlage mit elektronischer Regelung der Bremskraftverteilung auf Vorder- und Hinterachse, bei dem während eines Bremsvorganges die Fahrzeugverzögerung erfaßt und als Regelkriterium ausgewertet wird, **dadurch gekennzeichnet, daß** eine Erhöhung des Bremsdruckes in den Hinterradbremsen (5) nach dem Einsetzen (t₁) einer EBV-Regelung (1) nur dann zugelassen wird, wenn
(a) die Fahrzeugverzögerung nach dem EBV-Eintritt (t₁,1) über einen vorgegebenen Mindestwert (Δb_{FZ}) angestiegen ist (3) und/oder wenn
(b) das Vorliegen von Kriterien, die auf ein Bremsfading, auf eine Bremsfading-Gefahr bzw. auf eine Situation mit Bremsfading-Gefahr oder auf einen Fehler in der Bremsanlage hinweisen, erkannt wird und/oder wenn
(c) die Fahrzeugverzögerung einen hohen, für die Sicherheit kritischen Grenzwert überschreitet (4),
wobei bei einer Erhöhung der Pedalkraft (t₃) und damit des Hauptzylinderdrucks (p_{THZ}) durch den Fahrer der Druck (Pₙₑᵤ) in den Hinterradbremsen trotz des EBV-Regelvorgangs so lang (t₂, t₄) konstant bleibt und nicht in einem bestimmten Raster erhöht wird (Pₖ), bis zumindest eine der Bedingungen (a), (b) und/oder (c) erfüllt ist.

2. Verfahren nach Anspruch 1, **dadurch gekennzeichnet, daß** als Mindestwert, dessen Überschreitung als Kriterium für das Zulassen einer Bremsdruckerhöhung in den Hinterradbremsen gewertet wird, eine Fahrzeugverzögerungs-Zunahme im Bereich zwischen 0,15 g und 0,3 g, z.B. ein Wert von etwa 0,2 g, vorgegeben wird, wobei g die Erdbeschleunigungskonstante bedeutet.

3. Verfahren nach Anspruch 1 oder 2,
**dadurch gekennzeichnet,**
**daß** ein Kriterium oder Hinweis auf ein Bremsfading, Bremsfading-Gefahr oder auf einen Fehler mit Hilfe eines Zählers gewonnen wird, dessen Zählerinhalt während einer Bremsenbetätigung nach einem vorgegebenen Zeitraster geändert wird.

4. Verfahren nach Anspruch 3, **dadurch gekennzeichnet, daß** der Zählerinhalt in dem vorgegebenen Zeitraster jeweils um einen von der Fahrzeugverzögerungs-Zunahme abhängigen Wert erhöht und/oder um einen von der Fahrzeugverzögerungs-Abnahme abhängigen Wert erniedrigt wird.

5. Verfahren nach Anspruch 4, **dadurch gekennzeichnet, daß** die Erhöhung des Zählerinhalts bei Zunahme der Fahrzeugverzögerung um etwa 0,1 - 0,15 g pro Rasterschritt einsetzt, wobei bei höheren Fahrzeugverzögerungs-Zunahmen der Zählerinhalt schneller erhöht wird.

6. Verfahren nach einem oder mehreren der Ansprüche 3 bis 5, **dadurch gekennzeichnet, daß** nach einem Lösen der Bremse bzw. Freigeben des Bremspedals oder Wechsel des Bremslichtschalter-Signals der Zählerinhalt vollständig oder nach einem vorgegebenen Raster in Stufen erniedrigt wird.

7. Verfahren nach einem oder mehreren der Ansprüche 3 bis 6, **dadurch gekennzeichnet, daß** die Zählerrate, mit der der Zählerinhalt erhöht oder erniedrigt wird, in Abhängigkeit von der Fahrzeuggeschwindigkeit variiert wird.

8. Verfahren nach Anspruch 1, **dadurch gekennzeichnet, daß** zum Erkennen von Bremsfading oder Bremsfading-Gefahr ein Temperaturmodell gebildet und zur näherungsweisen Ermittlung der Bremsentemperatur ausgewertet wird sowie daß beim Überschreiten einer kritischen Temperatur, insbesondere einer kritischen Temperatur an den Vorderradbremsen, die Beschränkung des Bremsdruckaufbaus an den Hinterradbremsen aufgehoben wird.

9. Verfahren nach Anspruch 1, **dadurch gekennzeichnet, daß** ein über etwa 0,35 g bis 0,5 g oder über einem Wert von ca. 0,45 g liegende Fahrzeugverzögerung als ein für die Sicherheit kritischer Wert bewertet wird.

## Claims

1. Method of controlling the brake force distribution for a vehicle brake system with electronic control of the brake force distribution to the front and rear axles, wherein during a braking operation, the vehicle deceleration is sensed and evaluated as a control criterion,
**characterized in that** an increase in the braking pressure in the rear-wheel brakes (5) after the commencement (t₁) of an EBD control (1) is only permitted if
(a) the vehicle deceleration after EDB commencement (t₁, 1) has risen above a predetermined minimum value (Δb_{FZ}) (3), and/or if
(b) the presence of criteria which indicate brake fading, an imminent risk of brake fading, or a situation with a risk of brake fading, or a malfunction in the brake system is detected, and/or if
(c) the vehicle deceleration exceeds a high limit value which is critical for the safety of the vehicle (4),
wherein upon increase of the pedal force (t₃) and, thus, of the master cylinder pressure (p_{THZ}) by the driver the pressure (pₙₑᵤ) in the rear-wheel brakes in spite of the EBD control operation remains constant (t₂, t₄) and is not increased in a determined frame (Pₖ) until at least one of the conditions (a), (b), and/or (c) is satisfied.

2. Method as claimed in claim 1,
**characterized in that** a vehicle deceleration increase ranging between 0.15 g and 0.3 g, for example, a value of roughly 0.2 g, is predetermined as a minimum value, the exceeding of which is evaluated as a criterion for allowing a braking pressure increase in the rear-wheel brakes, with 'g' meaning the constant of acceleration due to gravity.

3. Method as claimed in claim 1 or 2,
**characterized in that** a criterion or an indication of brake fading, an imminent risk of brake fading, or of a malfunction is obtained by means of a counter, the content of the counter being varied during brake actuation according to a predetermined time frame.

4. Method as claimed in claim 3,
**characterized in that** the counter content in the predetermined time frame is respectively increased by a value which depends on the increase in vehicle deceleration, and/or is decreased by a value which depends on the decrease of the vehicle deceleration.

5. Method as claimed in claim 4,
**characterized in that** the increase of the counter content sets in with the rise in the vehicle deceleration by roughly 0.1 to 0.15 g per frame step, and with higher increases in vehicle deceleration, the counter content is increased more quickly.

6. Method as claimed in any one or more of claims 3 to 5,
**characterized in that** the counter content is decreased completely, or in steps according to a predetermined frame, after a release of the brake, or uncoupling of the brake pedal, or change of the signal of the brake light switch.

7. Method as claimed in any one or more of claims 3 to 6,
**characterized in that** the counter rate by which the counter content is increased or decreased is varied in dependence on the vehicle speed.

8. Method as claimed in claim 1,
**characterized in that** for the detection of brake fading or the imminent risk of brake fading, a temperature model is produced and evaluated for determining the brake temperature in approximation, and **in that** the limitation of the braking pressure buildup on the rear-wheel brakes is eliminated when a critical temperature is exceeded, especially a critical temperature on the front-wheel brakes.

9. Method as claimed in claim 1,
**characterized in that** a vehicle deceleration roughly exceeding 0.35 g to 0.5 g or a value of 0.45 g approximately is evaluated as a value which is critical with respect to safety.

## Revendications

1. Procédé de commande de la répartition de la force de freinage pour un système de freinage de véhicule avec régulation électronique de la répartition de la force de freinage sur l'essieu avant et l'essieu arrière, dans lequel le ralentissement du véhicule est détecté pendant une opération de freinage et est exploité en tant que critère de régulation, **caractérisé en ce qu'**une augmentation de la pression de freinage dans les freins (5) des roues arrière n'est autorisée qu'après initialisation (t1) d'une régulation EBV(1), si
(a) le ralentissement du véhicule après l'intervention EBV (t1, 1) a dépassé une valeur minimale (Δb_{FZ}) prédéterminée (3) et/ou si
(b) la présence de critères qui indiquent un évanouissement du freinage, un risque d'évanouissement du freinage ou une situation avec risque d'évanouissement du freinage ou un défaut du système de freinage, est reconnue et/ou si
(c) le ralentissement du véhicule dépasse une valeur limite élevée critique pour la sécurité (4),
dans le cas d'une augmentation de la force (t3) sur la pédale et donc de la pression (P_{THZ}) du cylindre principal de la part du conducteur, la pression (Pₙₑᵤ) dans les freins des roues arrière reste constante, malgré l'opération de régulation EBV, et n'est pas augmentée (Pₖ) suivant une trame déterminée, aussi longtemps (t₂, t₄) qu'au moins l'une des conditions (a), (b) et/ou (c) n'est pas satisfaite.

2. Procédé selon la revendication 1, **caractérisé en ce qu'**on prédétermine comme valeur minimale, dont le dépassement sert de critère pour autoriser une augmentation de la pression de freinage dans les freins des roues arrière, une augmentation du ralentissement du véhicule entre 0,15 g et 0,3 g, par exemple une valeur d'environ 0,2 g, g étant la constante d'accélération terrestre.

3. Procédé selon la revendication 1 ou 2, **caractérisé en ce qu'**on obtient un critère ou une indication d'un évanouissement du freinage, d'un risque d'évanouissement du freinage ou d'un défaut, à l'aide d'un compteur dont les chiffres sont modifiés pendant un actionnement des freins, selon un module de temps prédéterminé.

4. Procédé selon la revendication 3, **caractérisé en ce que** les chiffres du compteur sont augmentés, dans le module de temps prédéterminé, chaque fois d'une valeur qui dépend de l'augmentation du ralentissement du véhicule et/ou sont diminués d'une valeur qui dépend de la diminution du ralentissement du véhicule.

5. Procédé selon la revendication 4, **caractérisé en ce que** l'augmentation des chiffres du compteur commence lorsque le ralentissement du véhicule augmente d'environ 0,1 à 0,15 g par pas de module, les chiffres du compteur augmentant plus rapidement dans le cas d'une augmentation plus élevée du ralentissement du véhicule.

6. Procédé selon une ou plusieurs des revendications 3 à 5, **caractérisé en ce qu'**après un desserrement du frein ou un relâchement de la pédale de frein ou un changement du signal de l'interrupteur de feux de stop, les chiffres du compteur sont totalement diminués ou diminués par crans selon un module prédéterminé.

7. Procédé selon une ou plusieurs des revendications 3 à 6, **caractérisé en ce qu'**on fait varier le rythme du compteur auquel les chiffres sont augmentés ou diminués, en fonction de la vitesse du véhicule.

8. Procédé selon la revendication 1, **caractérisé en ce que** pour reconnaître l'évanouissement du freinage ou le risque d'évanouissement du freinage, il est formé un modèle de température qui est exploité pour déterminer par approximation la température des freins, et **en ce que** dans le cas où une température critique est dépassée, en particulier une température critique sur les freins des roues avant, la limitation de la formation de la pression de freinage sur les freins des roues arrières est supprimée.

9. Procédé selon la revendication 1, **caractérisé en ce qu'**un ralentissement du véhicule supérieur à environ 0,35 g à 0,5 g ou supérieur à une valeur d'environ 0,45 g est évalué comme une valeur critique pour la sécurité.
